(19) **Europäisches Patentamt European Patent Office Office européen des brevets**

(11) **EP 4 261 749 B1**

(12) **EUROPEAN PATENT SPECIFICATION**

(45) Date of publication and mention of the grant of the patent:
**01.07.2026 Bulletin 2026/27**

(21) Application number: **23158806.2**

(22) Date of filing: **27.02.2023**

(51) International Patent Classification (IPC):
**G06N 3/063** (2023.01)    **G06N 3/086** (2023.01)
**G06N 3/092** (2023.01)    **G06N 3/0985** (2023.01)
**G06N 3/0464** (2023.01)

(52) Cooperative Patent Classification (CPC):
**G06N 3/0985; G06N 3/0464; G06N 3/063; G06N 3/086; G06N 3/092**

(54) **AUTOMATED CREATION OF TINY DEEP LEARNING MODELS BASED ON MULTI-OBJECTIVE REWARD FUNCTION**

AUTOMATISCHE ERZEUGUNG VON KLEINEN TIEFENLERNMODELLEN AUF DER BASIS EINER MEHRZIEL-BELOHNUNGSFUNKTION

CRÉATION AUTOMATISÉE DE MODÈLES D'APPRENTISSAGE PROFOND DE TAILLE RÉDUITE SUR LA BASE D'UNE FONCTION DE RÉCOMPENSE MULTI-OBJECTIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.04.2022 IN 202221022177**

(43) Date of publication of application:
**18.10.2023 Bulletin 2023/42**

(73) Proprietor: **Tata Consultancy Services Limited Maharashtra (IN)**

(72) Inventors:
• **MUKHOPADHYAY, Shalini**
**700160 Kolkata West Bengal (IN)**
• **C JANA, Rajib Lochan**
**700160 Kolkata West Bengal (IN)**
• **GHOSE, Avik**
**700160 Kolkata West Bengal (IN)**
• **DEY, Swarnava**
**700160 Kolkata West Bengal (IN)**
• **DUTTA, Jeet**
**700160 Kolkata West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **XIANGXIANG CHU ET AL: "Multi-Objective Reinforced Evolution in Mobile Neural Architecture Search", ARXIV.ORG, CORNELL UNIVERSITY LIBRARY, 201 OLIN LIBRARY CORNELL UNIVERSITY ITHACA, NY 14853, 4 January 2019 (2019-01-04), XP081011342**
• **WANG XINGBIN ET AL: "NASGuard: A Novel Accelerator Architecture for Robust Neural Architecture Search (NAS) Networks", 2021 ACM/IEEE 48TH ANNUAL INTERNATIONAL SYMPOSIUM ON COMPUTER ARCHITECTURE (ISCA), IEEE, 14 June 2021 (2021-06-14), pages 776 - 789, XP033951927, DOI: 10.1109/ ISCA52012.2021.00066**
• **HASSAM ULLAH SHEIKH ET AL: "Designing a Multi-Objective Reward Function for Creating Teams of Robotic Bodyguards Using Deep Reinforcement Learning", ARXIV.ORG, CORNELL UNIVERSITY LIBRARY, 201 OLIN LIBRARY CORNELL UNIVERSITY ITHACA, NY 14853, 28 January 2019 (2019-01-28), XP081009155**
• **HAYEON LEE ET AL: "HELP: Hardware-Adaptive Efficient Latency Prediction for NAS via Meta-Learning", ARXIV.ORG, CORNELL UNIVERSITY LIBRARY, 201 OLIN LIBRARY CORNELL UNIVERSITY ITHACA, NY 14853, 2 December 2021 (2021-12-02), XP091108694**

EP 4 261 749 B1

- **ALEX KARBACHEVSKY ET AL: "HCM: Hardware-Aware Complexity Metric for Neural Network Architectures", ARXIV.ORG, CORNELL UNIVERSITY LIBRARY, 201 OLIN LIBRARY CORNELL UNIVERSITY ITHACA, NY 14853, 26 April 2020 (2020-04-26), XP081971072, DOI: 10.3390/SU13020717**

**Description**

TECHNICAL FIELD

The embodiments herein generally relate to Machine Learning (ML) and, more particularly, to a method and system for automated creation of Deep Learning (DL) models based on a multi-objective reward function.

BACKGROUND

Edge computing is an emerging domain of computing and Artificial Intelligence (AI) which deals with running Machine Learning (ML) and especially Deep Learning (DL) models on embedded devices. However, embedded devices are resource constraint and therefore, the models need to be reengineered to be deployed on such platforms. Several techniques like Neural Architecture Search (NAS) and model compression, which are employed to compress and generate optimized models for a particular hardware of the edge device or platform. While compression employs techniques like quantization, pruning and layer fusing to achieve smaller networks, NAS is a much tougher problem of selecting a network from given set of templates based on both hardware constraints and features. However, since space of embedded platforms is heterogeneous, the Neural Network (NN) search to get optimized model is huge with search approaches for NAS. Evolutionary Algorithms (EAs), Reinforcement Learning (RL), differentiable NAS etc., can solve the NAS search problem through agent based systems and hit-and-trial runs. However, even with RL in place, the best outcomes are not guaranteed because of the nature of RL exploration and exploitation as outlined by works in literature. Some existing methods refer to using EA or RL or both, however, do not disclose how multiple techniques work together in unison.

Building Deep Learning models for embedded systems not only requires skills in AI/DL, but also relies on the capability of choosing proper model primitives and network structures that are suitable for resource-limited systems. A search for such architectures must be platform aware, that is along with accuracy, which is generally the maim performance objective, it must conform to other hardware constraints such as inference latency (indicative of number of operations), runtime memory usage and size of the model. Works in the literature have referred to using multi-objective optimization to simultaneously balance objectives such the accuracy, scale, latency etc., when using NAS for hardware constraint target platforms. For example, an existing method *'Multi-Objective Neural Architecture Search', by Chi-Hung Hsu et.al* generates threshold condition based formulation of multiple rewards that changes depending on condition, However, does not propose multiple reward unction which is not generalized across all objectives. Another example work in literature, *'Multi-Task Learning for Multi-Objective Evolutionary Neural Architecture Search' by Ronghong Cai and Jianping Luo et.al* uses the multi-objective optimization algorithm to simultaneously balance the performance and the scale and build a multi-objective evolutionary search framework to find the Pareto optimal front. However, the work is uses NSGA-II multi-objective optimization to search for models in the domain of Multi-task learning, wherein it optimizes only for 2 objectives -- accuracy and number of parameters (scale) in a network scale. However, it was observed that some deeper networks can have lesser parameters than some smaller networks (33,325,792 for a 16 layered VGG vs 11,164,352 for an 18 layered ResNet) and yet perform better. Hence scale may not be appropriate parameter to be considered for optimization of NN.

Document (XIANGXIANG CHU ET AL: "Multi-Objective Reinforced Evolution in Mobile Neural Architecture Search", ARXIV.ORG, CORNELL UNIVERSITY LIBRARY, 201 OLIN LIBRARY CORNELL UNIVERSITY ITHACA, NY 14853, 4 January 2019 ) describes variant of multi-objective genetic algorithm NSGA-II, in which the search space is composed of various cells so that crossovers and mutations can be performed at the cell level. Moreover, reinforced control is mixed with a natural mutating process to regulate arbitrary mutation, maintaining a delicate balance between exploration and exploitation.

The document (WANG XINGBIN ET AL: "NASGuard: A Novel Accelerator Architecture for Robust Neural Architecture Search (NAS) Networks", 2021 ACM/IEEE 48TH ANNUAL INTERNATIONAL SYMPOSIUM ON COMPUTER ARCHITECTURE (ISCA)) describes a novel hardware architecture, NASGuard, which enables efficient inference of robust NAS networks. NASGuard leverages a heuristic multi-branch mapping model to improve the efficiency of the underlying computing resources. Moreover, NASGuard addresses the load imbalance problem between the computation and memory-access tasks from multi-branch parallel computing. Finally, we propose a topology-aware performance prediction model for data prefetching, to fully exploit the temporal and spatial localities of robust NAS-generated architectures. We have implemented NASGuard with Verilog RTL. The evaluation results show that NASGuard achieves an average speedup of 1.74X over the baseline DNN accelerator.

The document (HASSAM ULLAH SHEIKH ET AL: "Designing a Multi-Objective Reward Function for Creating Teams of Robotic Bodyguards Using Deep Reinforcement Learning" describes physical protection to a VIP in a crowded public space. We use deep reinforcement learning to learn the policy to be followed by the robots. As the robot bodyguards need to follow several difficult-to-reconcile goals, we study several primitive and composite reward functions and their impact on the overall behavior of the robotic bodyguards.

The document (HAYEON LEE ET AL: "HELP: Hardware-Adaptive Efficient Latency Prediction for NAS via Meta-Learning", ARXIV.ORG, CORNELL UNIVERSITY LIBRARY, 201 OLIN LIBRARY CORNELL UNIVERSITY ITHACA, NY 14853,) describes Hardware-adaptive Efficient Latency Predictor (HELP), which formulates the device-specific latency estimation problem as a meta-learning problem, such that we can estimate the latency of a model's performance for a given task on an unseen device with a few samples. To this end, we introduce novel hardware embeddings to embed any devices considering them as black-box functions that output latencies, and meta-learn the hardware-adaptive latency predictor in a device-dependent manner, using the hardware embeddings. We validate the proposed HELP for its latency estimation performance on unseen platforms, on which it achieves high estimation performance with as few as 10 measurement samples, outperforming all relevant baselines. We also validate end-to-end NAS frameworks using HELP against ones without it, and show that it largely reduces the total time cost of the base NAS method, in latency-constrained setting.

The document (ALEX KARBACHEVSKY ET AL: "HCM: Hardware-Aware Complexity Metric for Neural Network Architectures", ARXIV.ORG, CORNELL UNIVERSITY LIBRARY, 201 OLIN LIBRARY CORNELL UNIVERSITY ITHACA, NY 14853, 26 April 2020 (2020-04-26),) describes hardware-aware complexity metric that aims to assist the system designer of the neural network architectures, through the entire project lifetime (especially at its early stages) by predicting the impact of architectural and micro-architectural decisions on the final product. We demonstrate how the proposed metric can help evaluate different design alternatives of neural network models on resource-restricted devices such as real-time embedded systems, and to avoid making design mistakes at early stages.

SUMMARY

Embodiments of the present disclosure present technological improvements as solutions to one or more of the above-mentioned technical problems recognized by the inventors in conventional systems.

According to an aspect of the invention, a method for automated creation of Deep Learning (DL) models based on a multi-objective reward function according to claim 1 is provided.

In another aspect, a system for automated creation of Deep Learning (DL) models based on a multi-objective reward function according to claim 4 is provided.

In yet another aspect, there are provided one or more non-transitory machine-readable information storage mediums is according to claim 7.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for automated creation of tiny Deep Learning (DL) models based on a multi-objective reward function, in accordance with some embodiments of the present disclosure.

FIG. 1B illustrates an architectural overview of the system of FIG. 1A, in accordance with some embodiments of the present disclosure.

FIGS. 2A and 2B (collectively referred as FIG. 2) is a flow diagram illustrating a method for automated creation of tiny Deep Learning (DL) models based on a multi-objective reward function, using the system of FIG. 1A, in accordance with some embodiments of the present disclosure.

FIGS. 3 through 5 depict experimental results for a Deep Q-Learning Network (DQN) model based Neural Architecture Search (NAS) for creating tiny DL models, in accordance with some embodiments of the present disclosure.

FIG. 6 depicts candidate models that have been searched for with their objectives using an Evolutionary Algorithm based NAS search.

FIG. 7 depict searched models arranged based on performance metrics, selection in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts..

Neural Architecture Search (NAS) based model optimizations for hardware constraint devices is performed using various approaches. Some solutions discuss multiple objective NAS but require formulating multiple reward functions based on objective of interest. Some existing method refer to simultaneously handling multiple objectives such as accuracy and latency. However, the reward functions are static and not dynamically tunable at user end. Further, proposed are approaches that combine various techniques such as Reinforcement learning, Evolutionary Algorithm (EA) etc., however hardly any work attempts to disclose combining different NAS approaches in unison to reduce the search space of other.

Embodiments of the present disclosure provide a method and system for automated creation of tiny Deep Learning (DL) models to be deployed on a platform with hardware constraints. The method performs a coarse-grained search using a Fast EA NAS model with an EA agent utilizing a multi-objective reward function (R). The Fast EA NAS model identifies set of Neural Network (NN) architectures from large NAS space and narrows the search space to provide a refined search space. Further, a fine-grained search is performed on the refined search space by a Deep Q-Learning Network (DQN) model, wherein a DQN agent also utilizes the multi-objective reward function (R) to identify the customized and optimized architecture for the tiny model. The reward function is formulated such that it is a linear function of accuracy and exponential function of other performance metrics, which can be individually modulated, prioritized and thresholded based on relative weightage assigned to each of the performance metric in accordance requirements of a target application Narrowing down the search space of the DQN enables speedy identification of the customized and optimized architecture.

The relative weightage assigned to each of the performance metric is tunable, enabling dynamic changing of the multi-objective reward function (*R*) without requiring rebuilding and retraining of the Fast Evolutionary Algorithm (EA) NAS model and the DQN NAS model to align to changing requirements of the target application to be executed on of the platform. Thus, the method disclosed provides robustness across hardware platforms of different specifications, wherein user can input the details and the tiny models are generated accordingly.

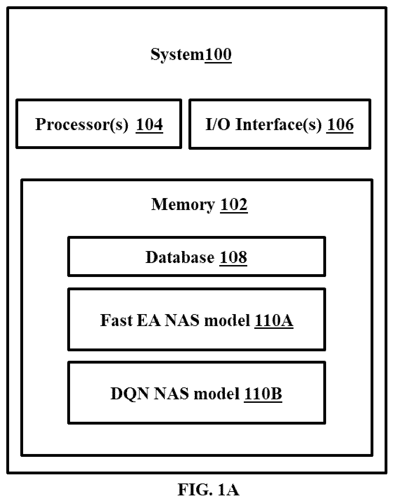

Referring now to the drawings, and more particularly to FIGS. 1A through 7, where similar reference characters denote corresponding features consistently throughout the figures, there are shown preferred embodiments and these embodiments are described in the context of the following exemplary system and/or method.

FIG. 1A is a functional block diagram of a system 100 for automated creation of tiny Deep Learning (DL) models based on the multi-objective reward function, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

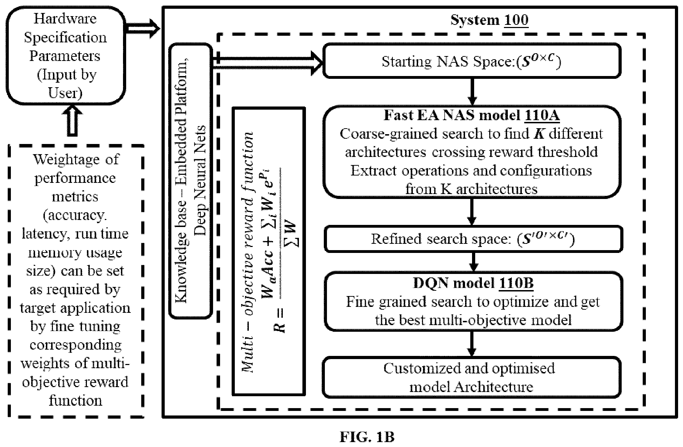

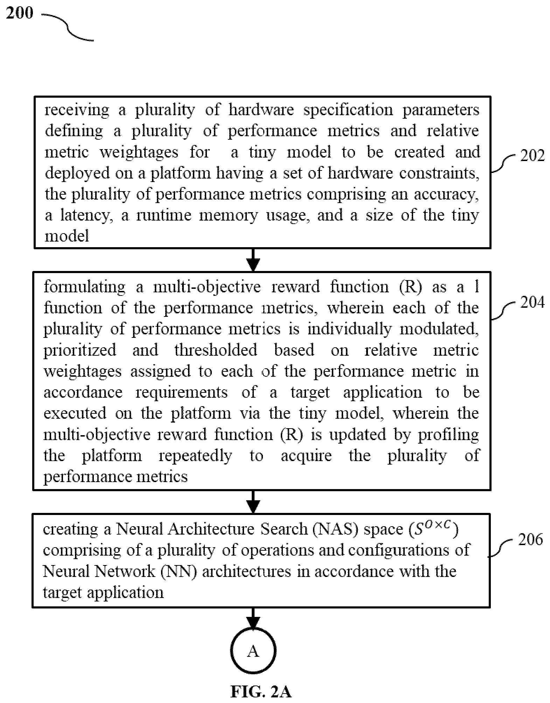

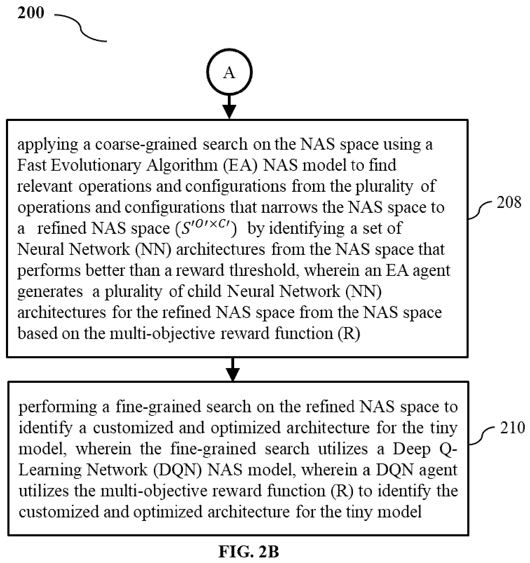

In an embodiment, the memory 102 includes a plurality of modules 110 such as Fast EA NAS model 110A and DQN NAS model 110B explained later in conjunction architecture of the system 100 as depicted in FIG. 1B and flow diagram of the method executed by the system 100 for creating tiny models as depicted in FIG. 2. The plurality of modules 110 include programs or coded instructions that supplement applications or functions performed by the system 100 for executing different steps involved in the process of automated creation of tiny Deep Learning (DL) models based on the multi-objective reward function, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown). The plurality of modules 110 may include computer-readable instructions that supplement applications or functions performed by the system 100 for automated creation of tiny Deep Learning (DL) models based on a multi-objective reward function. Further, the memory 102 may comprise information pertaining to input(s)/output(s) of each step performed by the processor(s) 104 of the system 100 and methods of the present disclosure.

Further, the memory 102 includes a database 108. The database (or repository) 108 may include a plurality of abstracted piece of code for refinement and data that is processed, received, or generated as a result of the execution of the plurality of modules in the module(s) 110. Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to architecture in FIG. 1B, steps in flow diagram of FIG. 2.

FIGS. 2A through 2B (collectively referred as FIG. 2) is a flow diagram illustrating a method 200 for automated creation of tiny Deep Learning (DL) models based on the multi-objective reward function (*R*), using the system of FIG. 1A, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A, 1B and the steps of flow diagram as depicted in FIG. 2.. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the one or more hardware processors 104 to receive a plurality of hardware specification parameters defining a plurality of performance metrics with relative metric weightages for creating a tiny model to be deployed on a platform having a set of hardware constraints. The plurality of performance metrics include an accuracy, a latency, a runtime memory usage, and a size of the tiny model and the like. The system 100 is configured to enable user to enter hardware specification details and weightages in a uniform description language.

Once the relative weightages are received, at step 204 of the method 200, the one or more hardware processors 104 are configured to formulate the multi-objective reward function (*R*) as an exponential function of the performance metrics. Each the plurality of performance metrics is individually modulated, prioritized and thresholded based on relative weightage assigned to each of the performance metric in accordance requirements of a target application to be executed on the platform via the tiny model. The multi-objective reward function (*R*) is updated by profiling the platform repeatedly to acquire the plurality of performance metric. The weighted relation of the multi-objective reward function with the accuracy is linear, and the latency, the runtime memory and the size is exponential, are added as a combined weighted exponential function of a difference between an actual values and a target values based on the hardware constraints for each of the latency, the runtime memory, and the size among the plurality of performance metrics.

The multi-objective reward function (*R*) is mathematically expressed as:

$$R = \frac{W_a Acc + \sum_i W_i e^{P_i}}{\sum W} \qquad (1)$$

wherein $P_i$ is the $i^{th}$ performance metric other than the accuracy *(Acc)*, $P_i = A_i - T_i$, $W_i$ is Weight of $i^{th}$ metric, $W_a$ is weight of accuracy (Acc), $\sum W$ is the sum of all weights, $A_i$ and $T_i$ are actual values and target values of the performance metrics other than the accuracy *(Acc),* provided by the hardware constraints of the platform. Metrics such as accuracy, model size and peak memory load can be estimated on the SDK side, that is on the PC where the search is running. However, how much time is taken for inference, indicated by the latency, cannot be estimated in a trivial way and it is required to rub the generated model on the actual hardware. Thus, the method enables estimation of latency by providing a way to predict the latency. The actual latency performance metric required by the multi-objective reward function (*R*) can be predicted using a prediction function ($P$), without actually profiling the Neural Network (NN) architectures on a platform to make a NAS search faster. The prediction function (P) is explained later in conjunction with derivation of latency prediction function and expressed in equation6 below.

Once the multi-objective reward function ($R$), also interchangeably referred to as reward, is formulated in accordance with the relative weightages are received, at step 206 of the method 200, the one or more hardware processors 104 are configured to create a Neural Architecture Search (NAS) space ($S^{O \times C}$) comprising of a plurality of operations and configurations of Neural Network (NN) architectures in accordance with the target application, as depicted in FIG. 1B.

At step 208 of the method 200, the one or more hardware processors 104 are configured to apply a coarse-grained search using a Fast Evolutionary Algorithm (EA) NAS model 110A to find relevant operations and configurations from the plurality of operations and configurations that narrows the NAS space to a refined NAS space ($S^{'O' \times C'}$). The refined NAS space identifies a set of Neural Network (NN) architectures from the NAS space that performs better than a reward threshold. Based on the target device's resource budget (compute power, SRAM size and storage memory), we set some threshold values that limits which ML models can be chosen for further evaluation. These thresholds result in a reward value as well called the reward threshold or threshold reward/fitness. So, models that exceed the reward threshold are subjected to selection/evaluation. The EA agent of the FAST EA NAS model generates a plurality of child Neural Network (NN) architectures for the fine-grained NAS space from the NAS space based on the multi-objective reward function ($R$). Since traditionally EA is a non-learning approach, approach like RL is added to the traditional EA by incorporating domain knowledge as "learnable mutations" by the EA agent, in the evolution process. The agent decides upon the sequence of the child thus guaranteeing a better model. The multi-objective fitness function reduces the exploration of the Fast EA NAS model 110A and leads to better exploitations. The Fast EA NAS model 110A tries out and selects the most promising architecture from alternatives (NAS space) and acts as a pre-processor to reduce NAS search space for the next DQN NAS model performing the search.

**Search strategy of the Fast EA NAS model 110A:** Evolutionary search in NAS is usually preferred over many other search techniques like Random Search (RS) or even Bayesian Optimization (BO) because it is fast and finds solutions that are superior to other search techniques. This is because EA NAS considers a global aggregate of solutions rather than a subgroup. A variety of search techniques exist in EA NAS, but one that is preferred is the Aging Evolutionary Search in the literature. An initial population of randomly generated models is created and then from a random subset of models, the fittest model is selected for evolution, i.e., its architecture is randomly altered. This can be as simple as adding/removing a layer to changing the number of filters/units in a layer. The term "fitness" is used to describe the viability of a model to be chosen for evolution because is necessary find a model that satisfies multiple criteria. For those reasons, the best model is not found at this EA NAS stage (which would be true if there was a single objective) but a set of models called the Pareto-optimal set is identified. A further development is carried on work in the literature *Edgar Liberis, Łukasz Dudziak and Nicholas D. Lane. (2020). μNAS: Constrained Neural Architecture*

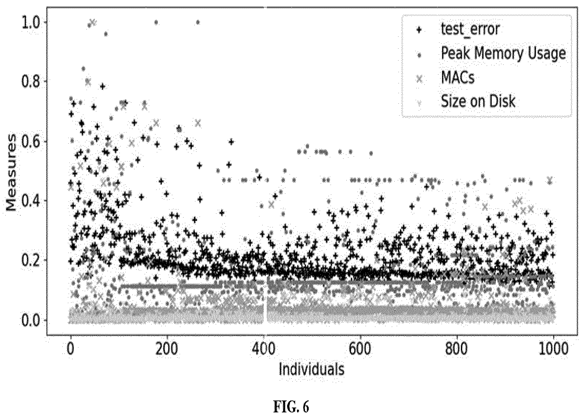

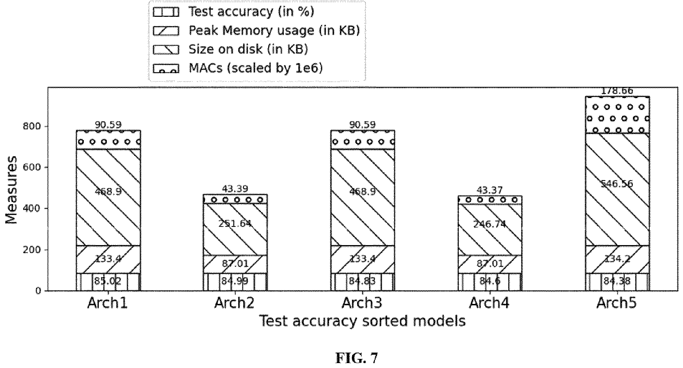

Search for Microcontrollers. for hardware modeling and searching targeting architecture for resource constrained devices. Even with a fast and sophisticated variant of Evolutionary search algorithm, a vast amount of time to search for models which are optimal in defined target objectives is looked into. This is because models attempting complex tasks need longer training time. A Progressive Dynamic Hurdles known in the literature is used to limit epochs allotted for each models based on a hurdle generated at different stages. This limits training time given to models showing no promise of being a viable candidate and allots extra time to those which shows that promise. The Fast EA NAS model was run for search on the CIFAR-10 dataset for a 1000 cycles, represented in FIG. 6. From the top 5 models based on test accuracy, represented by FIG. 7, the 2nd model and 4th model (K architectures) that cross the reward threshold are selected. As Decision Makers (DMs), users are allowed to provide preference to certain objectives such as the accuracy, latency, size, the runtime memory usage. For example, herein it is test accuracy.

At step 210 of the method 200, the one or more hardware processors 104 are configured to performing a fine-grained search on the refined NAS space to identify a customized and optimized architecture for the tiny model as depicted in FIG. 1B. The fine-grained search utilizes the DQN NAS model 110B, wherein a DQN agent of the DQN NAS model 110B utilizes the multi-objective reward function (R) to identify the customized and optimized architecture for the tiny model.

**Search strategy of for DQN or RL based NAS approach used by the DQN NAS model 110B is provided below:**

   a) Define Q Learning Neural Network

       a. 1 step = selection of 1 layer, 1 episode = 1 complete model

   b) Create new environment, Initialize parameters: no. of episodes E, Exploration rate $\varepsilon$, Exploration decay $\varepsilon\_decay$, Discount rate $\gamma$, Batch size, Training samples

c) Generate action space by encoding possible layers and possible parameters into tuple format

d) For episode e in E, reset state space, check ε value to select exploration or exploitation phase

e) Perform Exploration: 1. Random selection of layer type and layer parameters, 2. Continue selecting and adding layer to model until the termination layer is reached. 3. Evaluation of model and storing accuracy in memory as reward

f) Remember: 1. State-action pairs are stored in memory

g) Replay: 1. Q-values are evaluated in batches. 2. State values and

h) Fit Q-values into the DQN model

i) Exploitation: 1. Current state is taken as input to DQN model, action (layer selection) is predicted by QNN model. 2. All layers are combined into model, and accuracy is evaluated.

The relative weightage assigned to each of the performance metric is tunable, enabling dynamic changing of the multi-objective reward function (R) without requiring rebuilding and retraining of the Fast Evolutionary Algorithm (EA) NAS model and the DQN NAS model to align to changing requirements of the target application to be executed on the platform.

**DQN learning based NAS:** The neural architecture search algorithm based on reinforcement learning attempts to design high performance neural network architectures automatically. This is done with the help of an agent, by the process of exploring new architecture designs, evaluating them in terms of accuracy and model size, and then training the agent with those sets of states, actions, and rewards. The learning mechanism for the agent is through Deep Q-Learning technique, which is a type of reinforcement learning. The goal is to sequentially choose Neural Network layers using Q-learning and the epsilon-greedy strategy of exploration followed by experience replay. The Deep Q Learning agent explores the space of possible architectures and generates new configurations with improved performance on the selected dataset. The method 200 disclosed herein relies on Q-learning, a type of reinforcement learning.

**RL Environment Design for NAS:** The Reinforcement Learning Environment for generating and selecting Neural Network Architectures is designed in such a way as to specify the various states and actions permissible for the DQN agent. The environment also specifies the way it behaves when an action is performed at a given state, and thus the resulting next state evaluation. The state variables and action constraints are defined in the RL environment. The environment consists of the functions "explore action", "step execution", "reward calculation" and the state and action space specification parameters such as the kernel size, number of filters, number of neurons for dense layer, stride, etc. The details of the Agent and Exploration space are stated in the following subsection.

**RL Agent (DQN agent) and Exploration Space:** The RL agent is responsible for exploring the environment and performing various actions to collect rewards. The goal is to maximize the accumulated reward, which in the NAS Environment is a combination of accuracy, model size, latency, memory, and various other parameters, with varying weights as per application requirements. The functions of the agent include "run", "act", "remember" and "replay" which portray the behavior of the agent under different environment conditions, based on the reward received on performing various actions. In the process of neural architecture design, the sequential selection of layers is viewed as a Markov Decision Process where the selection of each layer is the action taken by the agent and the states are comprised of the outcome of selected action. The action space includes the different kinds of layers such as Convolution, Max Pooling, Dense and Termination (SoftMax) layers, with a range of parameters such as layer depth, Kernel Size, number of filters, stride, number of neurons to allow the agent to try various combinations of these parameters and come up with the best designs. A number of layers selected sequentially form a complete episode, at the end of which the accuracy and model size are evaluated to formulate the reward.

The Deep Q-Learning Network (DQN) agent is a Deep Neural Network having 4 dense layers with input dimension same as that of current state and output dimension equivalent to the size of the action space. The exploration strategy is based on epsilon greedy algorithm, where the epsilon value determines the exploration rate, and the value is set to 1.0 at the beginning of the Reinforcement Learning process, and on completion of a specified number of training episodes, it is decreased by a factor of 0.999 with each subsequent episode. The value of epsilon determines the probability of exploration and when this value reduces, the learned values from the DQN agent prior experience are looked up and for a given state, the action corresponding to the highest Q-value is selected. The expression for optimal Q-value is as follows:

$$Q*(s,a) \;=\; R(s,a) + \gamma\, max'a[Q*(s',a')] \qquad (2)$$

Here, $Q_*(s, a)$ is the optimal Q-value of current state, $Q_*(s', a')$ is the optimal $Q\text{-}value$ for next state, $R(s, a)$ is the reward for current state given the action a is performed. $\gamma$ is the discount factor which defines the weights of future rewards over immediate rewards. The expression $max'a$ denotes the best action chosen to ensure highest $Q\text{-}value$ in the next steps. For the implementation of the Neural Architecture Search algorithm with Reinforcement Learning, the states, actions, and models are represented in the form of tuples. The actions are represented by numeric values which signify the various parameters of the layers such as kernel size, number of filters, stride, number of neurons, to specify the exact configuration of the Neural Network Layer. Experiments have been conducted considering the various layers that constitute a Convolutional Neural Network, but the algorithm can be tuned to other types of neural networks as well, with variations needed in the state space definition and the action constraints.

**Knowledge-guided Deep Q-Learning Neural Architecture Search of the DQN NAS model 110B:** In addition to the accuracy and model size being determining factors for reward formulation, knowledge of hardware based specifications and constraints also play a major role in reshaping the rewards. Hardware based knowledge includes processor speed, available memory, and availability of accelerators to expedite specific instructions, which result in the generation of more efficient network designs. Additional reward parameters such as latency and floating point operations are directly linked to the hardware configuration.

**Formulation of Rewards:** As discussed above, there are different factors contributing to the reward formulation as depicted in equation 1 where

$$R = \frac{W_a Acc + \sum_i W_i\, e^{P_i}}{\sum W}$$

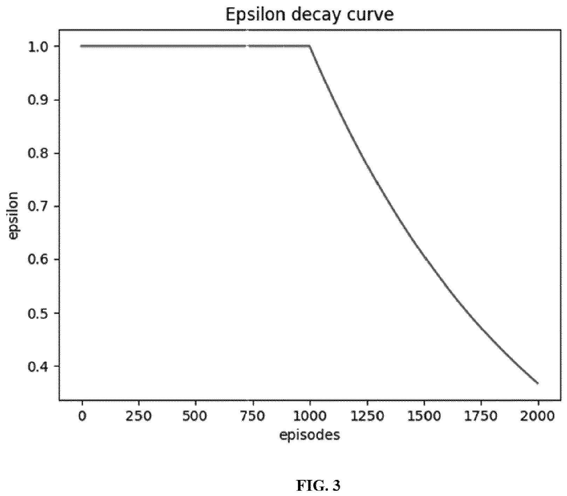

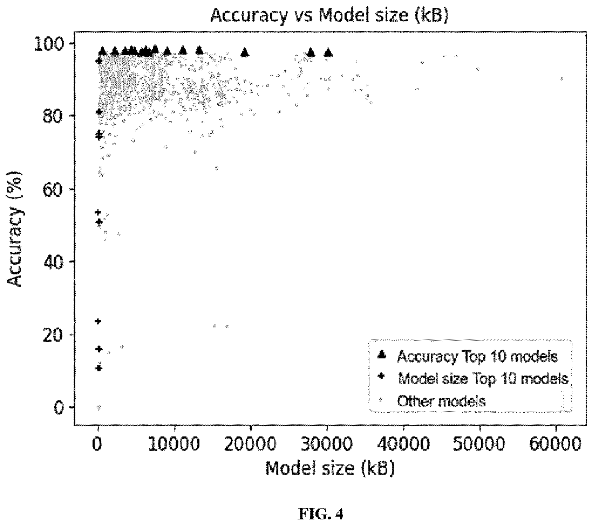

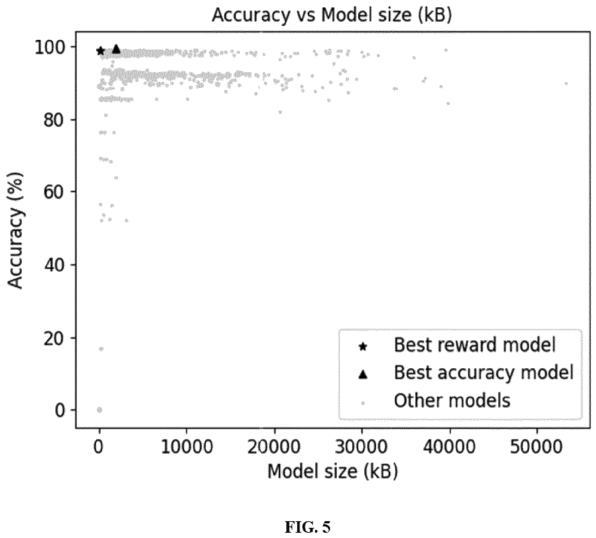

Results: Experiments were conducted on small datasets to observe the performance of the Deep Q-Learning NAS model 110 while creating tiny DL models and results depicted in FIGS. 3 through 5. with the MNIST image dataset, where 2000 models are generated. Figures 4 and 5 depict the accuracy versus model size scatter plot with 2000 generated models, and the best performing models in terms of Overall Reward (Exponential Expression), Accuracy, and model size have been shown, highlighted by separate symbols. The reward function here, helps generate the best models as per accuracy and size requirement of the desired application.

The highest accuracy value obtained is 100% during exploration phase with a 4-label image dataset. When considering model size as a parameter for evaluating reward, for the experiment of a total of 100 episodes, the model that satisfies both the accuracy and size constraints showed an output of Accuracy = 99.82% and Model size = 315.056 kB. The results are depicted in the FIGS. 3, and 4. FIG. 5 depicts the results for full MNIST datasets with 10 output classes. The best reward model accumulates a total reward = 950.27, accuracy = 95.33 %, model size = 102.73 kB (depicted in red), when equal weights are given for both the parameters accuracy and size in reward formulation, whereas the best accuracy model gets a total reward = 449.35, accuracy = 99.19 %, model size = 226.04 kB (depicted in black) with a total of 700 episodes.

**Neural Surrogates with NAS:** The platform aware NAS has a very challenging problem when it attempts to include embedded devices for the sampling new architecture. There is no other alternative other than running a new architecture in a given embedded hardware to find the execution latency, power consumption and other hardware dependent metrics. For instance, given P layer-wise configurations, a model with L layers and C different choices or those techniques, the total number of combinations to compute comes to be P×C×L. With a minimum T time needed to run a test cycle in a target dataset, the number of combinations explode. A technique is required to find the metrics associated with hardware execution without actually executing the neural network.

**Need for Prediction:** Predicted execution time for Deep Neural Network (DNN) guides the decision for selecting optimal model on edge device, e.g., Network Architecture Search (NAS) algorithm and DNN acceleration algorithm from the literature. Simple heuristic-based models are popular for predicting execution time. Number of FLOPs is usually used as a proxy for neural network latency. Thus, number of parameters and total FLOPs are used as estimator of execution time. Such prediction model does not lead to good estimate of execution time e.g., the fully connected layer usually has more parameters but takes much less time to run compared to the convolution Layer. Non-linear relation between network structure and execution time is explained in one of the literature works. Moreover, there are effect of caching, memory access, inter-process communication and compiler optimization. Good estimator of execution time improves the efficiency of NAS and acceleration algorithms. Number of parameters and total FLOPs-based prediction model may complicate the decision of such algorithms. Let us consider, two models have same total FLOPs in which number of multiplication of two model are different. Heuristic-based prediction infers same latency for both models, though the latency is not same. Why Execution times for different types of operation (addition, multiplication, division, max, min etc.) are different. To break the tie, it needs more fine-grained prediction model. Thus, there are following objectives:

- Consider different types of FLOP instead of compound FLOP like MAC.
- Consider device configuration (caching, memory access, inter-process communication) to determine execution times for different types of FLOP.
- Predict layer-wise and model-wise execution time of CNN

**Evaluation of the latency prediction mechanism based on the structural and embedded system parameters:**

**Hardware Model:**

1. Layer-wise Latency: Convolution Layer

$$\text{Input tensor} = I_X \times I_Y \times I_C$$

$$\text{Output tensor} = O_X \times O_Y \times O_C$$

$$\text{Filters} = F_X \times F_Y \times I_C \times O_C$$

Stride = $S$, Padding = $P$

No. of Multiplications $= F_X * F_Y * ([(I_X - F_X + 2P)]+1) * ([(I_Y - F_Y + 2P)/S]+1) * I_C * O_C = F_X * F_Y * O_X * O_Y * I_C * O_C = N_M$

$$\text{No. of Additions} = [(F_X * F_Y - 1) * I_C + (I_C - 1)] * O_X * O_Y * O_C = N_A$$

$$\text{Execution time} = T_M * N_M + T_A * N_A + \beta i$$

where, $T_M$ = Time for multiplication (Platform dependent), $T_A$ = Time for addition (Platform dependent) and $\beta i$ = Memory overhead (Platform dependent)

2. Layer-wise Latency: Pooling and Fully Connected Layer

(MAX) Pooling Layer:

$$\text{Input Tensor} = I_X \times I_Y \times I_C$$

Tile = $F_X \times F_Y \times I_C$, Stride = $S$, Padding = $P$

$$\text{Comparison} = F_X * F_Y * ([(I_X - F_X + 2P)/S]+1) * ([(I_Y - F_Y + 2P)/S]+1) * I_C = N_C$$

$$\text{Latency} = T_C * N_C$$

where, $T_C$ = Time for floating point comparison

Fully Connected Layer:

$$\text{Input Tensor} = 1 \times I_Y$$

$$\text{Filter} = F_X \times F_Y [I_Y = F + X]$$

$$\text{Multiplication} = I_Y * F_X * F_Y = N_M$$

$$\text{Addition} = (I_Y * F_X - 1) * F_Y = N_A$$

$$\text{Latency} = T_M * N_M + T_A * N_A + \beta i$$

3. Layer-wise Latency : Depth-wise and Point-wise Convolution Layer

Depth-wise Convolution Layer :

$$\text{Input Tensor} = I_X \times I_Y \times I_C$$

$$\text{Output Tensor} = O_X \times O_Y \times O_C$$

$$\text{Filter} = F_X \times F_Y \times I_C \times O_C$$

Stride $= S$, Padding $= P$

$$\text{No. of Multiplications} = F_X * F_Y * O_X * O_Y * I_C$$

$$\text{No. of Additions} = (F_X * F_Y - 1) * O_X * O_Y * I_C$$

Point-wise Convolution Layer:

$$\text{No. of Multiplications} = I_C * O_X * O_Y * O_C$$

$$\text{No. of Additions} = (I_C - 1) * O_X * O_Y * O_C$$

4. Platform Dependent Parameters

Parameters list

- 

$$\text{Execution time for basic operations} = T_O$$

- 

$$\text{Access time for cache (consider multi-level cache)} = T_C$$

- 

$$\text{Read + write time of primary memory} = T_{R(RAM)} + T_{W(RAM)}$$

- 

$$\text{Read + write time of secondary memory} = T_{R(ROM)} + T_{W(ROM)}$$

Effective Time

For single-level cache:

- If Cache hit, Effective time $= T_O + T_C$
- If Cache miss, Effective time $= T_O + 2T_C + T_{R(RAM)} + T_{W(RAM)}$

The Latency Prediction approach through the above discussed parameters is disclosed by the method disclosed herein. Thus, the latency performance metric required by the multi-objective reward function ($R$) can be predicted using a prediction function ($P$), without actually profiling the Neural Network (NN) architectures on a platform to make a NAS search faster.and is expressed as follows:

$$\text{Execution time for convolution layer} = T_M * T_N + T_A * N_A$$

$$\text{Effective Execution Time} = P = ET_M * N_M + ET_A * N_A + \beta_i \qquad (3)$$

where $ET_M$, $ET_A$ are Effective Execution Time for multiplication and addition respectively.

**Prediction of Effective latency:**

If m is cache miss ratio, latency/FLOP

$$(1 - m)(T_O + T_C) + m(T_O + 2T_C + T_{R(RAM)} + T_{W(RAM)}) = T_O + (1 - m)T_C + m(2T_C + T_{R(RAM)} + T_{W(RAM)}) \qquad (4)$$

Therefore, layer wise latency

$$T(l_l) = \sum_{j \in 0} N_j T_j + \sum_{j \in 0} N_j (1 - m) T_c + \sum_{j \in 0} N_j m \ m(2T_C + T_{R(RAM)} + T_{W(RAM)}) \qquad (5)$$

Inference latency of NN

$$T(NN) = \sum_i Size_{of_{WM_i}} (T_{R(ROM)} + T_{W(RAM)}) + \sum_i T(l_l) \qquad (6)$$

The written description describes the subject matter herein to enable any person skilled in the art to make and use the embodiments.

Thus, the method and system disclosed herein takes model accuracy, system constraints and the like and system utilization all together in a NAS framework. Further, utilizes the multi-objective reward function formulated for NAS with Accuracy, Latency, Runtime Memory, and Size to find the optimum model in an automated manner. The system allows user to enter hardware details in a uniform description language for NAS.

It is to be understood that the invention may comprise a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor implemented method (200) for automated creation of Deep Learning, DL, models, the method (200) comprising:

   receiving (202), via one or more hardware processors(104), a plurality of hardware specification parameters, wherein the plurality of hardware specification parameters defines a plurality of performance metrics with relative metric weightages for creating a DL model to be deployed on a platform having a set of hardware constraints, wherein the plurality of performance metrics comprises an accuracy, a latency, a runtime memory usage, and a size of the DL model;

   formulating (204), via the one or more hardware processors (104), a multi-objective reward function ($R$) as a function of the plurality of performance metrics, wherein each of the plurality of performance metrics is prioritized based on the relative metric weightage assigned to each of the plurality of performance metrics in accordance with requirements of a target application to be executed on the platform via the DL models, and wherein the multi-objective reward function ($R$) is updated by iteratively profiling the platform to acquire the plurality of performance metrics, wherein accuracy, model size and peak memory load are estimated by the one or more hardware processors, wherein the multi-objective reward function ($R$) is mathematically expressed as

   $$R = \frac{W_a Acc + \sum_i W_i e^{P_i}}{\sum W}$$, wherein $P_i$ is the $i^{th}$ performance metric excluding the accuracy *(Acc)*, $P_i = A_i - T_i$,

   $W_i$ is weight of $i^{th}$ metric, $W_a$ is weight of accuracy (Acc), $\sum W$ is the sum of all weights, $A_i$ *and* $T_i$ are actual values and target values of the performance metrics except the accuracy *(Acc),* provided by the hardware constraints of the platform, wherein the actual latency performance metric required by the multi-objective reward function (R) is predicted by the one or more hardware processors without running the DL model on the platform;

   creating (206), via the one or more hardware processors (104), a Neural Architecture Search, NAS, space ($S^{O \times C}$) in accordance with the target application, wherein the NAS space ($S^{O \times C}$) comprises a plurality of operations and configurations of Neural Network (NN) architectures;

   applying (208), via the one or more hardware processors (104), a coarse-grained search on the NAS space ($S^{O \times C}$) using a Fast Evolutionary Algorithm, EA, NAS model to find relevant operations and configurations from the plurality of operations and configurations that narrows the NAS space to a refined NAS space ($S'^{O' \times C'}$) by identifying a set of Neural Network (NN) architectures from the NAS space that performs better than a reward threshold, wherein an EA agent of the FAST EA NAS model generates a plurality of child Neural Network (NN) architectures for the refined NAS space from the NAS space based on the multi-objective reward function ($R$); and

   performing (210), via the one or more hardware processors (104), a fine-grained search on the refined NAS space to identify a customized and optimized architecture for the DL model, wherein the fine-grained search utilizes a Deep Q-Learning Network, DQN, NAS model, and wherein a DQN agent of the DQN NAS model utilizes the multi-objective reward function ($R$) to identify the customized and optimized architecture for the DL model based on the accuracy, latency, runtime memory usage and the size of the DL model.

2. The method (200) of claim 1, further including using a prediction function (Pr) for predicting the actual latency performance metric, wherein Pr is the execution time of a convolutional layer and the prediction function *(Pr)* is mathematically expressed as $Pr = ET_M * N_M + ET_A * N_A + \beta_i$, wherein $ET_M$ *and* $ET_A$ indicate a platform dependent effective execution time for multiplication and addition respectively, and $\beta_i$ is a platform dependent memory overhead, wherein $N_M$ represents no. of multiplications and

   represented as $= F_X * F_Y * ([(I_X - F_X + 2P)]+1) * ([(I_Y - F_Y + 2P)/S]+1) * I_C * O_C$ , *wherein* $I_X \times I_Y \times I_C$ represents input tensor, $O_X \times O_Y \times O_C$ *represents* output tensor, $F_X \times F_Y \times I_C \times O_C$ *represents* Filters, *S represents Stride,* and P represents padding, wherein $N_A$ represents no. of additions and represented as

   $[(F_X * F_Y - 1) * I_C + (I_C - 1)] * O_X * O_Y * O_C$ .

3. The method (200) of claim 1, wherein the relative metric weightages assigned to each of the performance metric are tunable, enabling dynamic changing of the multi-objective reward function ($R$) .

4. A system (100) for automated creation of Deep Learning, DL, models, the system (100) comprising:

  a memory (102) storing instructions;
  one or more Input/Output (I/O) interfaces (106); and
  one or more hardware processors (104) coupled to the memory (102) via the one or more I/O interfaces (106), wherein the one or more hardware processors (104) are configured by the instructions to:

    receive (202) a plurality of hardware specification parameters, wherein the plurality of hardware specification parameters defines a plurality of performance metrics with relative metric weightages for creating a DL model, to be deployed on a platform having a set of hardware constraints, wherein the plurality of performance metrics comprises an accuracy, a latency, a runtime memory usage, and a size of the DL model; formulate (204) a multi-objective reward function ($R$) as a function of the plurality of performance metrics, wherein each of the plurality of performance metrics is prioritized based on the relative metric weightage assigned to each of the plurality of performance metric in accordance with requirements of a target application to be executed on the platform via the DL model, and wherein the multi-objective reward function ($R$) is updated by iteratively profiling the platform to acquire the plurality of performance metrics, wherein accuracy, model size and peak memory load are estimated by the one or more hardware processors, wherein the multi-objective reward function ($R$) is mathematically expressed as $R = \dfrac{W_a Acc + \sum_i W_i e^{P_i}}{\sum W}$, wherein $P_i$

    is the $i^{th}$ performance metric excluding the accuracy ($Acc$), $P_i = A_i - T_i$, $W_i$ is weight of $i^{th}$ metric, $W_a$ is weight of accuracy (Acc), $\Sigma W$ is the sum of all weights, $A_i$ and $T_i$ are actual values and target values of the performance metrics except the accuracy *(Acc),* provided by the hardware constraints of the platform, wherein the actual latency performance metric required by the multi-objective reward function (R) is predicted by the one or more hardware processors using a prediction function without running the model on the platform; create (206) a Neural Architecture Search, NAS, space ($S^{O \times C}$) in accordance with the target application, wherein the NAS space ($S^{O \times C}$) comprises a plurality of operations and configurations of Neural Network (NN) architectures; apply (208) a coarse-grained search on the NAS space ($S^{O \times C}$) using a Fast Evolutionary Algorithm, EA, NAS model to find relevant operations and configurations from the plurality of operations and configurations that narrows the NAS space to a refined NAS space ($S'^{O' \times C'}$) by identifying a set of Neural Network (NN) architectures from the NAS space that performs better than a reward threshold, wherein an EA agent of the FAST EA NAS model generates a plurality of child Neural Network (NN) architectures for the refined NAS space from the NAS space based on the multi-objective reward function ($R$); and perform (210) a fine-grained search on the refined NAS space to identify a customized and optimized architecture for the DL model, wherein the fine-grained search utilizes a Deep Q-Learning Network, DQN, NAS model, and wherein a DQN agent of the DQN NAS model utilizes the multi-objective reward function ($R$) to identify the customized and optimized architecture for the DL model based on the accuracy, latency, runtime memory usage and the size of the DL model.

5. The system of claim 4, wherein a prediction function (Pr) is used for predicting the actual latency performance metric ,wherein Pr is the execution time of a convolutional layer and the prediction function *(Pr)* is mathematically expressed as $Pr = ET_M * N_M + ET_A * N_A + \beta_i$, wherein $ET_M$ *and* $ET_A$ indicate a platform dependent effective execution time for multiplication and addition respectively, $N_M$ *and* $N_A$ are number of multiplications and additions respectively, and $\beta_i$ is a platform dependent memory overhead, wherein $N_M$ represents no. of multiplications and represented as =

$$F_X * F_Y * (\lfloor (I_X - F_X + 2P) \rfloor + 1) * (\lfloor (I_Y - F_Y + 2P)/S \rfloor + 1) * I_C * O_C$$ , *wherein* $I_X \times I_Y \times I_C$ represents input tensor, $O_X \times O_Y \times O_C$ *represents* output tensor, $F_X \times F_Y \times I_C \times O_C$ *represents* Filters, *S represents Stride,* and P represents padding, wherein $N_A$ represents no. of additions and represented as

$$\lfloor (F_X * F_Y - 1) * I_C + (I_C - 1) \rfloor * O_X * O_Y * O_C .$$

6. The system of claim 4, wherein the relative metric weightages assigned to each of the performance metric are tunable, enabling dynamic changing of the multi-objective reward function ($R$).

7. One or more non-transitory machine-readable information storage mediums comprising one or more instructions which when executed by one or more hardware processors (104) cause by the one or more hardware processors:

  receiving (202) a plurality of hardware specification parameters, wherein the plurality of hardware specification parameters defines a plurality of performance metrics with relative metric weightages for creating a Deep Learning, DL, model, to be deployed on a platform having a set of hardware constraints, wherein the plurality of performance metrics comprises an accuracy, a latency, a runtime memory usage, and a size of the DL model; formulating (204) a multi-objective reward function ($R$) as a function of the plurality of performance metrics, wherein each of the plurality of performance metrics is prioritized based on the relative metric weightage assigned to each of the plurality of performance metric in accordance with requirements of a target application to be executed on the platform via the DL model, and wherein the multi-objective reward function ($R$) is updated by iteratively profiling the platform to acquire the plurality of performance metrics, wherein accuracy, model size and peak memory load are estimated by the one or more hardware processors, wherein the multi-objective reward function ($R$) is mathematically expressed as $R = \frac{W_a Acc + \sum_i W_i e^{P_i}}{\sum W}$, wherein $P_i$ is the $i^{th}$ performance metric excluding the accuracy ($Acc$), $P_i = A_i - T_i$, $W_i$ is weight of $i^{th}$ metric, $W_a$ is weight of accuracy (Acc), $\sum W$ is the sum of all weights, $A_i$ and $T_i$ are actual values and target values of the performance metrics except the accuracy *(Acc)*, provided by the hardware constraints of the platform, wherein an actual latency performance metric required by the multi-objective reward function (R) is predicted by the one or more hardware processors using a prediction function without running the model on the platform;

creating (206) a Neural Architecture Search, NAS, space ($S^{O \times C}$) in accordance with the target application, wherein the NAS space ($S^{O \times C}$) comprises a plurality of operations and configurations of Neural Network (NN) architectures;

applying (208) a coarse-grained search on the NAS space using a Fast Evolutionary Algorithm, EA, NAS model ($S^{O \times C}$) to find relevant operations and configurations from the plurality of operations and configurations that narrows the NAS space to a refined NAS space ($S^{'O' \times C'}$) by identifying a set of Neural Network (NN) architectures from the NAS space that performs better than a reward threshold, wherein an EA agent of the FAST EA NAS model generates a plurality of child Neural Network (NN) architectures for the refinedNAS space from the NAS space based on the multi-objective reward function ($R$); and

performing (210) a fine-grained search on the refined NAS space to identify a customized and optimized architecture for the DL model, wherein the fine-grained search utilizes a Deep Q-Learning Network, DQN, NAS model, and wherein a DQN agent of the DQN NAS model utilizes the multi-objective reward function ($R$) to identify the customized and optimized architecture for the DL model based on the accuracy, latency, runtime memory usage and the size of the DL model.

**Patentansprüche**

1. Prozessorimplementiertes Verfahren (200) zur automatisierten Erstellung von Deep-Learning-, DL-, Modellen, wobei das Verfahren (200) Folgendes umfasst:

   Empfangen (202), über einen oder mehrere Hardware-Prozessoren (104), einer Mehrzahl von Hardware-Spezifikationsparametern, wobei die Mehrzahl von Hardware-Spezifikationsparametern eine Mehrzahl von Leistungsmetriken mit relativen Metrikgewichtungen zum Erstellen eines DL-Modells definiert, das auf einer Plattform mit einem Satz von Hardware-Randbedingungen eingesetzt werden soll, wobei die Mehrzahl von Leistungsmetriken eine Genauigkeit, eine Latenz, eine Laufzeitspeichernutzung und eine Größe des DL-Modells umfasst;

   Formulieren (204), über den einen oder die mehreren Hardware-Prozessoren (104), einer multiobjektiven Belohnungsfunktion ($R$) als eine Funktion der Mehrzahl von Leistungsmetriken, wobei jede der Mehrzahl von Leistungsmetriken basierend auf der relativen Metrikgewichtung priorisiert wird, die jeder der Mehrzahl von Leistungsmetriken gemäß Anforderungen einer Zielanwendung zugewiesen wird, die auf der Plattform über die DL-Modelle ausgeführt werden soll, und wobei die multiobjektive Belohnungsfunktion ($R$) durch iteratives Profilieren der Plattform aktualisiert wird, um die Mehrzahl von Leistungsmetriken zu erfassen, wobei Genauigkeit, Modellgröße und Spitzenspeicherlast durch den einen oder die mehreren Hardware-Prozessoren geschätzt werden, wobei die multiobjektive Belohnungsfunktion ($R$) mathematisch ausgedrückt wird als $R = \frac{W_a Acc + \sum_i W_i e^{P_i}}{\sum W}$, wobei $P_i$ die $i^{th}$ Leistungsmetrik ist, die die Genauigkeit (Acc) ausschließt, $P_i = A_i - T_i$, $W_i$ das Gewicht der $i^{th}$ Metrik ist, $W_a$ das Gewicht der Genauigkeit (Acc) ist, $\sum W$ die Summe aller Gewichte ist, $A_i$ und $T_i$ tatsächliche Werte und Zielwerte der Leistungsmetriken mit Ausnahme der Genauigkeit *(Acc)* sind, die durch die Hardware-Randbedingungen der Plattform bereitgestellt werden, wobei die tatsächliche Latenzleistungsmetrik, die durch die multiobjektive Belohnungsfunktion (R) erforderlich ist, durch den einen oder die mehreren Hardware-Prozessoren vorhergesagt wird, ohne das DL-Modell auf der Plattform auszuführen;

Erstellen (206), über den einen oder die mehreren Hardware-Prozessoren (104), eines Neural-Architecture-Search-, NAS-, Raums ($S^{O \times C}$) gemäß der Zielanwendung, wobei der NAS-Raum ($S^{O \times C}$) eine Mehrzahl von Operationen und Konfigurationen von Neural-Network- (NN-) Architekturen umfasst;

Anwenden (208), über den einen oder die mehreren Hardware-Prozessoren (104), einer grobkörnigen Suche auf dem NAS-Raum ($S^{O \times C}$) unter Verwendung eines Fast-Evolutionary-Algorithmus-, EA-, NAS-Modells, um relevante Operationen und Konfigurationen aus der Mehrzahl von Operationen und Konfigurationen zu finden, die den NAS-Raum auf einen verfeinerten NAS-Raum ($S'^{O' \times C'}$) durch Identifizieren eines Satzes von Neural-Network- (NN-) Architekturen aus dem NAS-Raum, der besser als ein Belohnungsschwellenwert arbeitet, einschränken, wobei ein EA-Agent des FAST-EA-NAS-Modells eine Mehrzahl von Kind-Neural-Network- (NN-) Architekturen für den verfeinerten NAS-Raum aus dem NAS-Raum basierend auf der multiobjektiven Belohnungsfunktion ($R$); erzeugt; und

Durchführen (210), über den einen oder die mehreren Hardware-Prozessoren (104), einer feinkörnigen Suche auf dem verfeinerten NAS-Raum, um eine kundenspezifische und optimierte Architektur für das DL-Modell zu identifizieren, wobei die feinkörnige Suche ein Deep-Q-Learning-Network-, DQN-, NAS-Modell verwendet, und wobei ein DQN-Agent des DQN-NAS-Modells die multiobjektive Belohnungsfunktion ($R$) verwendet, um die kundenspezifische und optimierte Architektur für das DL-Modell basierend auf der Genauigkeit, Latenz, Laufzeitspeichernutzung und der Größe des DL-Modells zu identifizieren.

2. Verfahren (200) nach Anspruch 1, ferner beinhaltend Verwenden einer Vorhersagefunktion (Pr) zum Vorhersagen der tatsächlichen Latenzleistungsmetrik, wobei Pr die Ausführungszeit einer Faltungsschicht ist und die Vorhersagefunktion *(Pr)* mathematisch ausgedrückt wird als $Pr = ET_M * N_M + ET_A * N_A + \beta_i$, wobei $ET_M$ *und* $ET_A$ eine plattformabhängige effektive Ausführungszeit für Multiplikation bzw. Addition angibt und $\beta_i$ ein plattformabhängiger Speicheroverhead ist, wobei $N_M$ keine Multiplikationen darstellt und dargestellt wird als $= F_X * F_Y * (\lfloor (I_X - F_X + 2P) \rfloor + 1) * (\lfloor (I_Y - F_Y + 2P)/S \rfloor + 1) * I_C * O_C$, *wobei* $I_X \times I_Y \times I_C$ Eingabetensor darstellt, $O_X \times O_Y \times O_C$ Ausgabetensor *darstellt*, $F_X \times F_Y \times I_C \times O_C$ Filter *darstellt, S Stride darstellt* und P Padding darstellt, wobei $N_A$ keine Additionen darstellt und dargestellt wird als $\lfloor (F_X * F_Y - 1) * I_C + (I_C - 1) \rfloor * O_X * O_Y * O_C$.

3. Verfahren (200) nach Anspruch 1, wobei die relativen Metrikgewichtungen, die jeder der Leistungsmetrik zugewiesen sind, einstellbar sind, was dynamisches Ändern der multiobjektiven Belohnungsfunktion ($R$) ermöglicht.

4. System (100) zur automatisierten Erstellung von Deep-Learning-, DL-, Modellen, wobei das System (100) Folgendes umfasst:

einen Speicher (102), der Anweisungen speichert;
eine oder mehrere Eingabe/Ausgabe- (I/O-) Schnittstellen (106); und
einen oder mehrere Hardwareprozessoren (104), die über die eine oder die mehreren 1/O-Schnittstellen (106) mit dem Speicher (102) gekoppelt sind, wobei der eine oder die mehreren Hardwareprozessoren (104) durch die Anweisungen konfiguriert sind zum:

Empfangen (202) einer Mehrzahl von Hardware-Spezifikationsparametern, wobei die Mehrzahl von Hardware-Spezifikationsparametern eine Mehrzahl von Leistungsmetriken mit relativen Metrikgewichtungen zum Erstellen eines DL-Modells definiert, das auf einer Plattform mit einem Satz von Hardware-Randbedingungen eingesetzt werden soll, wobei die Mehrzahl von Leistungsmetriken eine Genauigkeit, eine Latenz, eine Laufzeitspeichernutzung und eine Größe des DL-Modells umfasst;

Formulieren (204) einer multiobjektiven Belohnungsfunktion ($R$) als eine Funktion der Mehrzahl von Leistungsmetriken, wobei jede der Mehrzahl von Leistungsmetriken basierend auf der relativen Metrikgewichtung priorisiert wird, die jeder der Mehrzahl von Leistungsmetriken gemäß Anforderungen einer Zielanwendung zugewiesen wird, die auf der Plattform über das DL-Modell ausgeführt werden soll, und wobei die multiobjektive Belohnungsfunktion ($R$) durch iteratives Profilieren der Plattform aktualisiert wird, um die Mehrzahl von Leistungsmetriken zu erfassen, wobei Genauigkeit, Modellgröße und Spitzenspeicherlast durch den einen oder die mehreren Hardware-Prozessoren geschätzt werden, wobei die multiobjektive Belohnungsfunktion ($R$) mathematisch ausgedrückt wird als $R = \dfrac{W_a Acc + \sum_i W_i e^{P_i}}{\sum W}$, wobei $P_i$ die $i^{th}$ Leistungsmetrik ist, die die Genauigkeit *(Acc)* ausschließt, $P_i = A_i - T_i$, $W_i$ das Gewicht der $i^{th}$ Metrik ist, $W_a$ das Gewicht der Genauigkeit (Acc) ist, $\sum W$ die Summe aller Gewichte ist, $A_i$ *und* $T_i$ tatsächliche Werte und

Zielwerte der Leistungsmetriken mit Ausnahme der Genauigkeit (*Acc*) sind, die durch die Hardware-Randbedingungen der Plattform bereitgestellt werden, wobei die tatsächliche Latenzleistungsmetrik, die durch die multiobjektive Belohnungsfunktion (R) erforderlich ist, durch den einen oder die mehreren Hardware-Prozessoren unter Verwendung einer Vorhersagefunktion vorhergesagt wird, ohne das Modell auf der Plattform auszuführen;

Erstellen (206) eines Neural-Architecture-Search-, NAS-, Raums ($S^{O \times C}$) gemäß der Zielanwendung, wobei der NAS-Raum ($S^{O \times C}$) eine Mehrzahl von Operationen und Konfigurationen von Neural-Network- (NN-) Architekturen umfasst;

Anwenden (208) einer grobkörnigen Suche auf dem NAS-Raum ($S^{O \times C}$) unter Verwendung eines Fast-Evolutionary-Algorithmus-, EA-, NAS-Modells, um relevante Operationen und Konfigurationen aus der Mehrzahl von Operationen und Konfigurationen zu finden, die den NAS-Raum auf einen verfeinerten NAS-Raum ($S'^{O' \times C'}$) durch Identifizieren eines Satzes von Neural-Network- (NN-) Architekturen aus dem NAS-Raum, der besser als ein Belohnungsschwellenwert arbeitet, einschränken, wobei ein EA-Agent des FAST-EA-NAS-Modells eine Mehrzahl von Kind-Neural-Network- (NN-) Architekturen für den verfeinerten NAS-Raum aus dem NAS-Raum basierend auf der multiobjektiven Belohnungsfunktion (R); erzeugt; und

Durchführen (210) einer feinkörnigen Suche auf dem verfeinerten NAS-Raum, um eine kundenspezifische und optimierte Architektur für das DL-Modell zu identifizieren, wobei die feinkörnige Suche ein Deep-Q-Learning-Network-, DQN-, NAS-Modell verwendet, und wobei ein DQN-Agent des DQN-NAS-Modells die multiobjektive Belohnungsfunktion (R) verwendet, um die kundenspezifische und optimierte Architektur für das DL-Modell basierend auf der Genauigkeit, Latenz, Laufzeitspeichernutzung und der Größe des DL-Modells zu identifizieren.

5. System nach Anspruch 4, wobei eine Vorhersagefunktion (Pr) zum Vorhersagen der tatsächlichen Latenzleistungsmetrik verwendet wird, wobei Pr die Ausführungszeit einer Faltungsschicht ist und die Vorhersagefunktion *(Pr)* mathematisch ausgedrückt wird als $Pr = ET_M * N_M + ET_A * N_A + \beta_i$, wobei $ET_M$ und $ET_A$ eine plattformabhängige effektive Ausführungszeit für Multiplikation bzw. Addition angibt, $N_M$ und $N_A$ eine Anzahl von Multiplikationen bzw. Additionen ist und $\beta_i$ ein plattformabhängiger Speicheroverhead ist, wobei $N_M$ keine Multiplikationen darstellt und dargestellt $\text{wird als} = F_X * F_Y * (\lfloor (I_X - F_X + 2P) \rfloor + 1) * (\lfloor (I_Y - F_Y + 2P)/S \rfloor + 1) * I_C * O_C$, *wobei* $I_X \times I_Y \times I_C$ Eingabetensor darstellt, $O_X \times O_Y \times O_C$ Ausgabetensor *darstellt*, $F_X \times F_Y \times I_C \times O_C$ Filter *darstellt, S Stride darstellt* und P Padding darstellt, wobei $N_A$ keine Additionen darstellt und dargestellt wird als $\lfloor (F_X * F_Y - 1) * I_C + (I_C - 1) \rfloor * O_X * O_Y * O_C$.

6. System nach Anspruch 4, wobei die relativen Metrikgewichtungen, die jeder der Leistungsmetrik zugewiesen sind, einstellbar sind, was dynamisches Ändern der multiobjektiven Belohnungsfunktion (R) ermöglicht.

7. Ein oder mehrere nichtflüchtige maschinenlesbare Informationsspeichermedien, die eine oder mehrere Anweisungen umfassen, die, wenn sie von einem oder mehreren Hardwareprozessoren (104) ausgeführt werden, den einen oder die mehreren Hardwareprozessoren zu Folgendem veranlassen:

Empfangen (202) einer Mehrzahl von Hardware-Spezifikationsparametern, wobei die Mehrzahl von Hardware-Spezifikationsparametern eine Mehrzahl von Leistungsmetriken mit relativen Metrikgewichtungen zum Erstellen eines Deep-Learning-, DL-, Modells definiert, das auf einer Plattform mit einem Satz von Hardware-Randbedingungen eingesetzt werden soll, wobei die Mehrzahl von Leistungsmetriken eine Genauigkeit, eine Latenz, eine Laufzeitspeichernutzung und eine Größe des DL-Modells umfasst;

Formulieren (204) einer multiobjektiven Belohnungsfunktion (R) als eine Funktion der Mehrzahl von Leistungsmetriken, wobei jede der Mehrzahl von Leistungsmetriken basierend auf der relativen Metrikgewichtung priorisiert wird, die jeder der Mehrzahl von Leistungsmetriken gemäß Anforderungen einer Zielanwendung zugewiesen wird, die auf der Plattform über das DL-Modell ausgeführt werden soll, und wobei die multiobjektive Belohnungsfunktion (R) durch iteratives Profilieren der Plattform aktualisiert wird, um die Mehrzahl von Leistungsmetriken zu erfassen, wobei Genauigkeit, Modellgröße und Spitzenspeicherlast durch den einen oder die mehreren Hardware-Prozessoren geschätzt werden, wobei die multiobjektive Belohnungsfunktion (R) mathematisch ausgedrückt wird als $R = \dfrac{W_a Acc + \sum_i W_i e^{P_i}}{\sum W}$, wobei $P_i$ die $i^{th}$ Leistungsmetrik ist, die die Genauigkeit (*Acc*) ausschließt, $P_i = A_i - T_i$, $W_i$ das Gewicht der $i^{th}$ Metrik ist, $W_a$ das Gewicht der Genauigkeit (Acc) ist, $\Sigma W$ die Summe aller Gewichte ist, $A_i$ *und* $T_i$ tatsächliche Werte und Zielwerte der Leistungsmetriken mit Ausnahme der Genauigkeit (*Acc*) sind, die durch die Hardware-Randbedingungen der Plattform bereitgestellt werden, wobei eine tatsächliche Latenzleistungsmetrik, die durch die multiobjektive Belohnungsfunktion (R) erforderlich ist, durch den einen oder die mehreren Hardware-Prozessoren unter Verwendung einer Vorhersagefunktion vorhergesagt wird, ohne das Modell auf der Plattform auszuführen;

Erstellen (206) eines Neural-Architecture-Search-, NAS-, Raums ($S^{O \times C}$) gemäß der Zielanwendung, wobei der NAS-Raum ($S^{O \times C}$) eine Mehrzahl von Operationen und Konfigurationen von Neural-Network- (NN-) Architekturen umfasst;

Anwenden (208) einer grobkörnigen Suche auf dem NAS-Raum unter Verwendung eines Fast-Evolutionary-Algorithmus-, EA-, NAS-Modells ($S^{O \times C}$), um relevante Operationen und Konfigurationen aus der Mehrzahl von Operationen und Konfigurationen zu finden, die den NAS-Raum auf einen verfeinerten NAS-Raum ($S'^{O' \times C'}$) durch Identifizieren eines Satzes von Neural-Network- (NN-) Architekturen aus dem NAS-Raum, der besser als ein Belohnungsschwellenwert arbeitet, einschränken, wobei ein EA-Agent des FAST-EA-NAS-Modells eine Mehrzahl von Kind-Neural-Network- (NN-) Architekturen für den verfeinerten NAS-Raum aus dem NAS-Raum basierend auf der multiobjektiven Belohnungsfunktion ($R$); erzeugt; und

Durchführen (210) einer feinkörnigen Suche auf dem verfeinerten NAS-Raum, um eine kundenspezifische und optimierte Architektur für das DL-Modell zu identifizieren, wobei die feinkörnige Suche ein Deep-Q-Learning-Network-, DQN-, NAS-Modell verwendet, und wobei ein DQN-Agent des DQN-NAS-Modells die multiobjektive Belohnungsfunktion ($R$) verwendet, um die kundenspezifische und optimierte Architektur für das DL-Modell basierend auf der Genauigkeit, Latenz, Laufzeitspeichernutzung und der Größe des DL-Modells zu identifizieren.

## Revendications

1. Procédé mis en œuvre par processeur (200) pour la création automatisée de modèles d'apprentissage profond, DL, le procédé (200) comprenant :

la réception (202), via un ou plusieurs processeurs matériels (104), d'une pluralité de paramètres de spécification matérielle, dans lequel la pluralité de paramètres de spécification matérielle définit une pluralité de métriques de performance avec des pondérations de métrique relatives pour créer un modèle DL à déployer sur une plate-forme ayant un ensemble de contraintes matérielles, dans lequel la pluralité de métriques de performance comprend une précision, une latence, une utilisation de mémoire d'exécution, et une taille du modèle DL ;

la formulation (204), via les un ou plusieurs processeurs matériels (104), d'une fonction de récompense multi-objectifs ($R$) en fonction de la pluralité de métriques de performance, dans lequel chacune de la pluralité de métriques de performance est priorisée sur la base de la pondération de métrique relative attribuée à chacune de la pluralité de métriques de performance conformément aux exigences d'une application cible à exécuter sur la plate-forme via les modèles DL, et dans lequel la fonction de récompense multi-objectifs ($R$) est mise à jour en profilant de manière itérative la plate-forme pour acquérir la pluralité de métriques de performance, dans lequel la précision, la taille du modèle et la charge de mémoire de crête sont estimées par les un ou plusieurs processeurs matériels, dans lequel la fonction de récompense multi-objectifs ($R$) est mathématiquement exprimée comme

$$R = \frac{W_a Acc + \sum_i W_i e^{P_i}}{\sum W}$$, dans lequel $P_i$ est la métrique de performance $i^{th}$ à l'exclusion de la précision *(Acc)*, $P_i = A_i - T_i$, $W_i$ est le poids de la métrique $i^{th}$, $W_a$ est le poids de la précision (Acc), $\sum W$ est la somme de tous les poids, $A_i$ and $T_i$ sont des valeurs réelles et des valeurs cibles des métriques de performance à l'exception de la précision *(Acc)*, fournies par les contraintes matérielles de la plate-forme, dans lequel la métrique de performance de latence réelle requise par la fonction de récompense multi-objectifs (R) est prédite par les un ou plusieurs processeurs matériels sans exécuter le modèle DL sur la plate-forme ;

la création (206), via les un ou plusieurs processeurs matériels (104), d'un espace de recherche d'architecture neuronale, NAS, ($S^{O \times C}$) conformément à l'application cible, dans lequel l'espace NAS ($S^{O \times C}$) comprend une pluralité d'opérations et de configurations d'architectures de réseau neuronal (NN) ;

l'application (208), via les un ou plusieurs processeurs matériels (104), d'une recherche à grains grossiers sur l'espace NAS ($S^{O \times C}$) en utilisant un modèle NAS d'algorithme évolutionnaire rapide, EA, pour trouver des opérations et des configurations pertinentes parmi la pluralité d'opérations et de configurations qui rétrécit l'espace NAS à un espace NAS raffiné ($S'^{O' \times C'}$) en identifiant un ensemble d'architectures de réseau neuronal (NN) à partir de l'espace NAS qui donne de meilleurs résultats qu'un seuil de récompense, dans lequel un agent EA du modèle NAS EA rapide génère une pluralité d'architectures de réseau neuronal (NN) enfants pour l'espace NAS raffiné à partir de l'espace NAS sur la base de la fonction de récompense multi-objectifs ($R$); et

la réalisation (210), via les un ou plusieurs processeurs matériels (104), d'une recherche à grains fins sur l'espace NAS raffiné pour identifier une architecture personnalisée et optimisée pour le modèle DL, dans lequel la recherche à grains fins utilise un modèle NAS de réseau Q-learning profond, DQN, et dans lequel un agent DQN du modèle NAS DQN utilise la fonction de récompense multi-objectifs (R) pour identifier l'architecture personnalisée et optimisée pour le modèle DL sur la base de la précision, de la latence, de l'utilisation de mémoire d'exécution et de la taille du modèle DL.

2. Procédé (200) selon la revendication 1, incluant en outre l'utilisation d'une fonction de prédiction (Pr) pour prédire la métrique de performance de latence réelle, dans lequel Pr est le temps d'exécution d'une couche de convolution et la fonction de prédiction (*Pr*) est mathématiquement exprimée par $Pr = ET_M * N_M + ET_A * N_A + \beta_i$, dans lequel $ET_M$ *and* $ET_A$ indique un temps d'exécution effectif dépendant de la plate-forme pour la multiplication et l'addition respectivement, et $\beta_i$ est un surdébit de mémoire dépendant de la plate-forme, dans lequel $N_M$ représente le nombre de multiplications et représenté

$$par = FX * FY * (\lfloor (I_X - FX + 2P) \rfloor + 1) * (\lfloor (IY - FY + 2P)/S \rfloor + 1) * I_C * O_C$$ , dans *lequel* $I_X \times IY \times I_C$ *représente* le tenseur d'entrée, $O_X \times O_Y \times O_C$ représente le tenseur de sortie, $FX \times FY \times I_C \times O_C$ représente les filtres, S représente le pas, et P représente le remplissage, dans lequel $N_A$ représente le nombre d'additions et est

représenté par $\lfloor (F_X * FY - 1) * I_C + (I_C - 1) \rfloor * O_X * O_Y * O_C$ .

3. Procédé (200) selon la revendication 1, dans lequel les pondérations de métrique relatives attribuées à chacune des métriques de performance sont accordables, permettant un changement dynamique de la fonction de récompense multi-objectifs *(R)*.

4. Système (100) pour la création automatisée de modèles d'apprentissage profond, DL, le système (100) comprenant :

   une mémoire (102) stockant des instructions ;
   une ou plusieurs interfaces d'entrée/sortie (E/S) (106) ; et
   un ou plusieurs processeurs matériels (104) couplés à la mémoire (102) via les une ou plusieurs interfaces E/S (106), dans lequel les un ou plusieurs processeurs matériels (104) sont configurés par les instructions pour :

      recevoir (202) une pluralité de paramètres de spécification matérielle, dans lequel la pluralité de paramètres de spécification matérielle définit une pluralité de métriques de performance avec des pondérations de métrique relatives pour créer un modèle DL, à déployer sur une plate-forme ayant un ensemble de contraintes matérielles, dans lequel la pluralité de métriques de performance comprend une précision, une latence, une utilisation de mémoire d'exécution, et une taille du modèle DL ;
      formuler (204) une fonction de récompense multi-objectifs (R) en fonction de la pluralité de métriques de performance, dans lequel chacune de la pluralité de métriques de performance est priorisée sur la base de la pondération de métrique relative attribuée à chacune de la pluralité de métriques de performance conformément aux exigences d'une application cible à exécuter sur la plate-forme via le modèle DL, et dans lequel la fonction de récompense multi-objectifs (R) est mise à jour en profilant de manière itérative la plate-forme pour acquérir la pluralité de métriques de performance, dans lequel la précision, la taille du modèle et la charge de mémoire de crête sont estimées par les un ou plusieurs processeurs matériels, dans lequel la fonction de récompense multi-objectifs (R) est mathématiquement exprimée comme

      $$R = \frac{W_a Acc + \sum_i W_i e^{P_i}}{\sum W}$$ , dans lequel $P_i$ est la métrique de performance $i^{th}$ à l'exclusion de la précision *(Acc)*, $P_i = A_i - T_i$, $W_i$ est le poids de la métrique $i^{th}$, $W_a$ est le poids de la précision (Acc), $\sum W$ est la somme de tous les poids, $A_i$ *and* $T_i$ sont des valeurs réelles et des valeurs cibles des métriques de performance à l'exception de la précision (*Acc*), fournies par les contraintes matérielles de la plate-forme, dans lequel la métrique de performance de latence réelle requise par la fonction de récompense multi-objectifs (R) est prédite par les un ou plusieurs processeurs matériels en utilisant une fonction de prédiction sans exécuter le modèle sur la plate-forme ;
      créer (206) un espace de recherche d'architecture neuronale, NAS, ($S^{O \times C}$) conformément à l'application cible, dans lequel l'espace NAS ($S^{O \times C}$) comprend une pluralité d'opérations et de configurations d'architectures de réseau neuronal (NN) ;
      appliquer (208) une recherche à grains grossiers sur l'espace NAS ($S^{O \times C}$) en utilisant un modèle NAS d'algorithme évolutionnaire rapide, EA, pour trouver des opérations et des configurations pertinentes parmi la pluralité d'opérations et de configurations qui rétrécit l'espace NAS à un espace NAS raffiné ($S'^{O' \times C'}$) en identifiant un ensemble d'architectures de réseau neuronal (NN) à partir de l'espace NAS qui donne de meilleurs résultats qu'un seuil de récompense, dans lequel un agent EA du modèle NAS EA rapide génère une pluralité d'architectures de réseau neuronal (NN) enfants pour l'espace NAS raffiné à partir de l'espace NAS sur la base de la fonction de récompense multi-objectifs (*R*); et

réaliser (210) une recherche à grains fins sur l'espace NAS raffiné pour identifier une architecture personnalisée et optimisée pour le modèle DL, dans lequel la recherche à grains fins utilise un modèle NAS de réseau Q-learning profond, DQN, et dans lequel un agent DQN du modèle NAS DQN utilise la fonction de récompense multi-objectifs (*R*) pour identifier l'architecture personnalisée et optimisée pour le modèle DL sur la base de la précision, de la latence, de l'utilisation de mémoire d'exécution et de la taille du modèle DL.

**5.** Système selon la revendication 4, dans lequel une fonction de prédiction (*Pr*) est utilisée pour prédire la métrique de performance de latence réelle, dans lequel Pr est le temps d'exécution d'une couche de convolution et la fonction de prédiction (*Pr*) est mathématiquement exprimée par $Pr = ET_M * N_M + ET_A * N_A + \beta_i$, dans lequel $ET_M$ and $ET_A$ indique un temps d'exécution effectif dépendant de la plate-forme pour la multiplication et l'addition respectivement, $N_M$ and $N_A$ est le nombre de multiplications et d'additions respectivement, et $\beta_i$ est un surdébit de mémoire dépendant de la plate-forme, dans lequel $N_M$ représente le nombre de multiplications et représenté

$$\text{par} = FX * F_Y * (\lfloor (I_X - FX + 2P) \rfloor + 1) * (\lfloor (IY - FY + 2P)/S \rfloor + 1) * I_C * O_C$$ , dans *lequel* $I_X \times IY \times I_C$ représente le tenseur d'entrée, $O_X \times O_Y \times O_C$ représente le tenseur de sortie, FX $\times$ FY $\times I_C \times O_C$ *représente* les filtres, *S représente* le pas, et P représente le remplissage, dans lequel $N_A$ représente le nombre d'additions et est

représenté par $\lfloor (FX * FY - 1) * I_C + (I_C - 1) \rfloor * O_X * O_Y * O_C$ .

**6.** Système selon la revendication 4, dans lequel les pondérations de métrique relatives attribuées à chacune des métriques de performance sont accordables, permettant un changement dynamique de la fonction de récompense multi-objectifs (*R*).

**7.** Un ou plusieurs supports de stockage d'informations lisibles par machine non transitoires comprenant une ou plusieurs instructions qui, lorsqu'elles sont exécutées par un ou plusieurs processeurs matériels (104), amènent les un ou plusieurs processeurs matériels à :

recevoir (202) une pluralité de paramètres de spécification matérielle, dans lequel la pluralité de paramètres de spécification matérielle définit une pluralité de métriques de performance avec des pondérations de métrique relatives pour créer un modèle d'apprentissage profond, DL, à déployer sur une plate-forme ayant un ensemble de contraintes matérielles, dans lequel la pluralité de métriques de performance comprend une précision, une latence, une utilisation de mémoire d'exécution, et une taille du modèle DL ;

formuler (204) une fonction de récompense multi-objectifs (*R*) en fonction de la pluralité de métriques de performance, dans lequel chacune de la pluralité de métriques de performance est priorisée sur la base de la pondération de métrique relative attribuée à chacune de la pluralité de métriques de performance conformément aux exigences d'une application cible à exécuter sur la plate-forme via le modèle DL, et dans lequel la fonction de récompense multi-objectifs (*R*) est mise à jour en profilant de manière itérative la plate-forme pour acquérir la pluralité de métriques de performance, dans lequel la précision, la taille du modèle et la charge de mémoire de crête sont estimées par les un ou plusieurs processeurs matériels, dans lequel la fonction de récompense multi-objectifs (*R*) est mathématiquement exprimée comme $R = \frac{W_a Acc + \sum_i W_i e^{P_i}}{\sum W}$ , dans lequel $P_i$ est la métrique

de performance $i^{th}$ à l'exclusion de la précision (*Acc*), $P_i = A_i - T_i$, $W_i$ est le poids de la métrique $i^{th}$, $W_a$ est le poids de la précision (Acc), $\Sigma W$ est la somme de tous les poids, $A_i$ and $T_i$ sont des valeurs réelles et des valeurs cibles des métriques de performance à l'exception de la précision (*Acc*), fournies par les contraintes matérielles de la plate-forme, dans lequel une métrique de performance de latence réelle requise par la fonction de récompense multi-objectifs (R) est prédite par les un ou plusieurs processeurs matériels en utilisant une fonction de prédiction sans exécuter le modèle sur la plate-forme ;

créer (206) un espace de recherche d'architecture neuronale, NAS, ($S^{O \times C}$) conformément à l'application cible, dans lequel l'espace NAS ($S^{O \times C}$) comprend une pluralité d'opérations et de configurations d'architectures de réseau neuronal (NN) ;

appliquer (208) une recherche à grains grossiers sur l'espace NAS en utilisant un modèle NAS d'algorithme évolutionnaire rapide, EA, ($S^{O \times C}$) pour trouver des opérations et des configurations pertinentes parmi la pluralité d'opérations et de configurations qui rétrécit l'espace NAS à un espace NAS raffiné ($S'^{O' \times C'}$) en identifiant un ensemble d'architectures de réseau neuronal (NN) à partir de l'espace NAS qui donne de meilleurs résultats qu'un seuil de récompense, dans lequel un agent EA du modèle NAS EA rapide génère une pluralité d'architectures de réseau neuronal (NN) enfants pour l'espace NAS raffiné à partir de l'espace NAS sur la base de la fonction de récompense multi-objectifs (*R*); et

réaliser (210) une recherche à grains fins sur l'espace NAS raffiné pour identifier une architecture personnalisée et optimisée pour le modèle DL, dans lequel la recherche à grains fins utilise un modèle NAS de réseau Q-learning profond, DQN, et dans lequel un agent DQN du modèle NAS DQN utilise la fonction de récompense multi-objectifs (*R*) pour identifier l'architecture personnalisée et optimisée pour le modèle DL sur la base de la précision, de la latence, de l'utilisation de mémoire d'exécution et de la taille du modèle DL.

System**100**

Processor(s) **104**    I/O Interface(s) **106**

Memory **102**

Database **108**

Fast EA NAS model **110A**

DQN NAS model **110B**

**FIG. 1A**

Hardware
Specification
Parameters
(Input by
User)

Weightage of
performance
metrics
(accuracy.
latency, run time
memory usage
size) can be set
as required by
target application
by fine tuning
corresponding
weights of multi-
objective reward
function

**System 100**

Knowledge base – Embedded Platform, Deep Neural Nets

$Multi-objective\ reward\ function$

$$R = \frac{W_a Acc + \sum_i W_i e^{P_i}}{\sum W}$$

Starting NAS Space: $(S^{O \times C})$

**Fast EA NAS model 110A**
Coarse-grained search to find $K$ different
architectures crossing reward threshold
Extract operations and configurations
from K architectures

Refined search space: $(S'^{O' \times C'})$

**DQN model 110B**
Fine grained search to optimize and get
the best multi-objective model

Customized and optimised
model Architecture

**FIG. 1B**

200

receiving a plurality of hardware specification parameters defining a plurality of performance metrics and relative metric weightages for a tiny model to be created and deployed on a platform having a set of hardware constraints, the plurality of performance metrics comprising an accuracy, a latency, a runtime memory usage, and a size of the tiny model — 202

formulating a multi-objective reward function (R) as a l function of the performance metrics, wherein each of the plurality of performance metrics is individually modulated, prioritized and thresholded based on relative metric weightages assigned to each of the performance metric in accordance requirements of a target application to be executed on the platform via the tiny model, wherein the multi-objective reward function (R) is updated by profiling the platform repeatedly to acquire the plurality of performance metrics — 204

creating a Neural Architecture Search (NAS) space $(S^{O \times C})$ comprising of a plurality of operations and configurations of Neural Network (NN) architectures in accordance with the target application — 206

A

FIG. 2A

**200**

A

applying a coarse-grained search on the NAS space using a Fast Evolutionary Algorithm (EA) NAS model to find relevant operations and configurations from the plurality of operations and configurations that narrows the NAS space to a refined NAS space ($S'^{O'\times C'}$) by identifying a set of Neural Network (NN) architectures from the NAS space that performs better than a reward threshold, wherein an EA agent generates a plurality of child Neural Network (NN) architectures for the refined NAS space from the NAS space based on the multi-objective reward function (R)  — 208

performing a fine-grained search on the refined NAS space to identify a customized and optimized architecture for the tiny model, wherein the fine-grained search utilizes a Deep Q-Learning Network (DQN) NAS model, wherein a DQN agent utilizes the multi-objective reward function (R) to identify the customized and optimized architecture for the tiny model  — 210

**FIG. 2B**

FIG. 3

FIG. 4

**FIG. 5**

FIG. 6

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multi-Objective Reinforced Evolution in Mobile Neural Architecture Search. **XIANGXIANG CHU et al.** ARXIV.ORG. CORNELL UNIVERSITY LIBRARY, 04 January 2019
- **WANG XINGBIN et al.** NASGuard: A Novel Accelerator Architecture for Robust Neural Architecture Search (NAS) Networks. *ACM/IEEE 48TH ANNUAL INTERNATIONAL SYMPOSIUM ON COMPUTER ARCHITECTURE (ISCA)*, 2021

- **HASSAM ULLAH SHEIKH et al.** *Designing a Multi-Objective Reward Function for Creating Teams of Robotic Bodyguards Using Deep Reinforcement Learning*
- HELP: Hardware-Adaptive Efficient Latency Prediction for NAS via Meta-Learning. **HAYEON LEE et al.** ARXIV.ORG. CORNELL UNIVERSITY LIBRARY
- HCM: Hardware-Aware Complexity Metric for Neural Network Architectures. **ALEX KARBACHEVSKY et al.** ARXIV.ORG. CORNELL UNIVERSITY LIBRARY, 26 April 2020